# EUROPEAN PATENT APPLICATION

(11) **EP 4 001 114 A1**
(43) Date of publication of application: **25.05.2022**
(21) Application number: 21209543.4
(22) Date of filing: 22.11.2021
(51) Int. Cl.: B64D 11/04

(54) **AIRCRAFT FOOD APPLIANCE**

(30) Priority: 20.11.2020 IN 202041050589
(71) Applicant: B/E Aerospace, Inc., Winston-Salem, NC 27105 (US)
(72) Inventor: SHETGAR, Tippanna, 500049 Hyderabad (IN); MAHABALESHWARA, Aravinda, 500089 Hyderabad (IN); SRINIVASA, Ashwin, 500091 Hyderabad (IN); MOHANAM, Rajesh, 500089 Hyderabad (IN)
(74) Representative: Dehns

(57) **Abstract**

A system for producing an edible arrangement including an appliance (102) configured to cook an uncooked food product by providing energy to the uncooked food product on a substrate (514) and a galley (104) or meal cart (300) housing the appliance.

## Description

### Background

### Priority Claim

The following application claims priority to IN Provisional Patent Application with serial number 202041050589 filed on November 20, 2020.

### Technological Field

The present disclosure relates to a 3D food printer, and more particularly to a 3D food printer embedded within an aircraft galley, meal cart, or table.

### Description of Related Art

A variety of devices are known for food preparation and storage on airplanes. However due to strict hygiene and sanitation requirements it is very costly and time consuming to prepare and store foods of aircraft. Food typically has to be prepared well in advance of the flight, and packaged in a very strict manner. This is costly and wasteful. There is still a need in the art for a food delivery system having improved efficiency while maintaining hygiene and sanitation measures. There also remains a need in the art for such systems and components that are economically viable. The present disclosure may provide a solution for at least one of these remaining challenges.

### Summary of the Invention

A system for producing an edible arrangement, meal, or individual food stuff is disclosed. The system includes an appliance configured to cook an uncooked food product by providing energy to the uncooked food product on a substrate and a galley, meal cart, or table housing the appliance. The appliance can be embedded within a cabinet, or be movably embedded within a serving table. The appliance can be moveable between a first position, wherein the appliance is fully below a top surface of the serving table, and a second position wherein at least a portion of the appliance is below the top surface of the serving table. The galley or meal cart are within a vehicle, such as aircraft.

The appliance can include a first ingredient container connected to a first mixer by a first conduit, a second ingredient container connected to the first mixer by a second conduit, a nozzle connected to the mixer by a third conduit configured to inject a mixture including the first ingredient and the second ingredient onto the substrate. The substrate can be moveable with relation to the nozzle. The nozzle can be moveable with respect to the substrate. At least one of the ingredients can be water, a powder, or a puree.

The meal cart can include a refrigeration system, and the refrigeration system can include a dry ice compartment. The meal cart can include a plurality of appliances, wherein each of the appliances are connected to a pneumatic pack.

The system can include a communication network connecting the appliance and an end user interface for personalizing and selecting a personalized mixture. The end user interface and the appliance are not required to be mechanically connected. The end user interface can be embedded into a passenger seat. A delivery vehicle for delivering the mixture from the appliance to a location proximate to the end user interface can be used to deliver the food.

These and other features of the systems and methods of the subject disclosure will become more readily apparent to those skilled in the art from the following detailed description of the preferred embodiments taken in conjunction with the drawings.

### Brief Description of the Drawings

So that those skilled in the art to which the subject invention appertains will readily understand how to make and use the devices and methods of the subject invention without undue experimentation, preferred embodiments thereof will be described in detail herein below with reference to certain figures, wherein:
Fig. 1 shows a perspective view of an interior of an aircraft;
Fig. 2 shows a table including the appliance in a first position and a second position;
Fig. 3 shows meal cart of an aircraft having a system according the disclosure;
Fig. 4 shows a schematic diagram depicting a food delivery system accoding to the disclosure; and
Fig. 5 shows diagram view of an appliance of Fig. 2 showing inner tubing and connections.

### Detailed Description

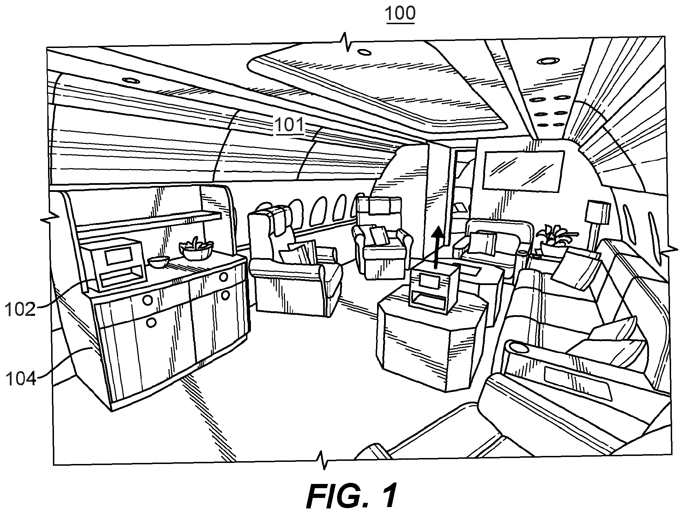

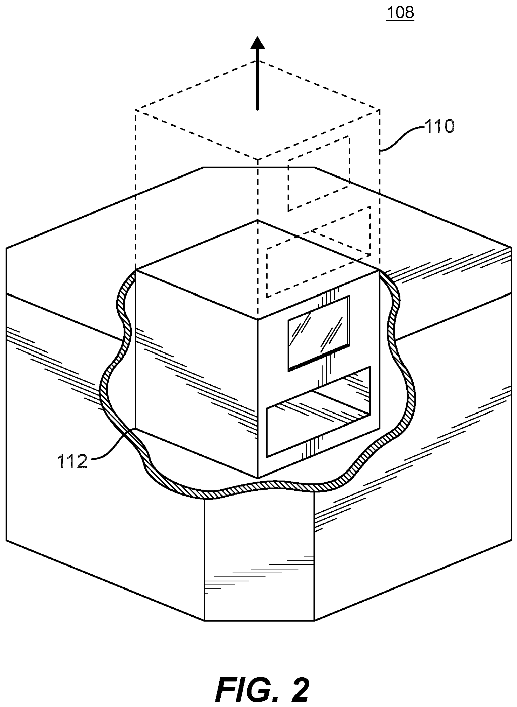

Reference will now be made to the drawings wherein like reference numerals identify similar structural features or aspects of the subject invention. For purposes of explanation and illustration, and not limitation, a partial view of an exemplary embodiment of a food preparation system in accordance with the invention is shown in Fig. 1 and is designated generally by reference character 100. Other embodiments of the system in accordance with the invention, or aspects thereof, are provided in Figs. 2-5, as will be described. The methods and systems of the invention can be used to prepare meals quickly, efficiently, on order in an aircraft setting.

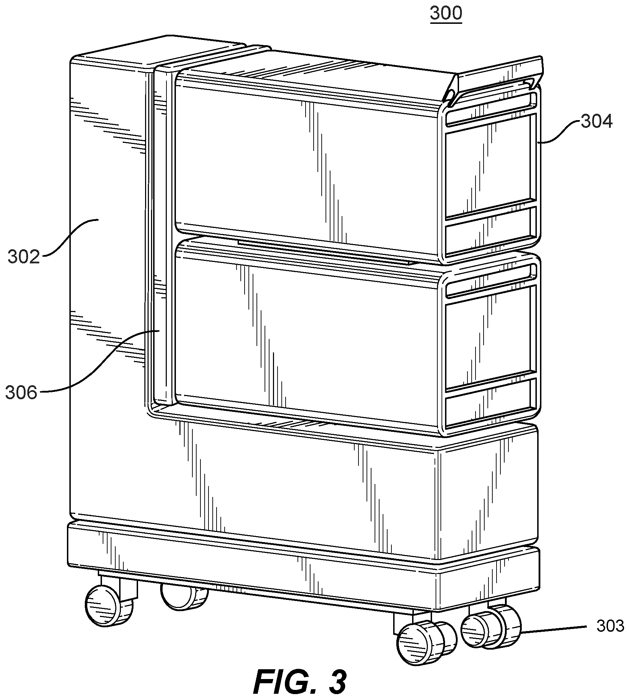

Fig. 1 shows an interior of a vehicle, such as train, bus or aircraft 101 as depicted in Fig. 1. The aircraft can be a regional, personal, or commercial airliner. The aircraft includes a system 100 for producing an edible arrangement, meal, or individual foodstuff. The system 100 includes an appliance 102, such as a 3D-food printer, which can cook an uncooked food product or ingredient by providing energy to it. The appliance 102 can be placed in a galley 104, a meal cart 300 (as shown in Fig. 3), or be movably embedded within a serving table 108 (as shown in Fig. 2).

Fig. 2 shows that the appliance 102 is moveable between a first position 110, where the appliance is fully above a top surface of the serving table 108 (as shown in phantom), and a second position 112 where the appliance stowed within the table. In the second positon, the top surface 114 of the appliance 102 can be flush with the top surface of the serving table 108. It is also considered that the appliance 102 can be fully stowed within the table and be covered with cover when not in use as.

Fig. 3 shows a meal cart 300 including a refrigeration system 302, with possibly a dry ice compartment, which can be refilled so that the refrigeration system does not have to be powered to keep food and ingredients cold. The meal cart 300 can include one or a plurality of appliances 304, wherein each of the appliances are connected to a pneumatic pack 306. The meal cart can also include automated wheel 303 allowing the cart 300 to move around the cabin without requiring a steward to push it. The pneumatic pack 306 is responsible for dispensing the food product onto trays within the appliance.

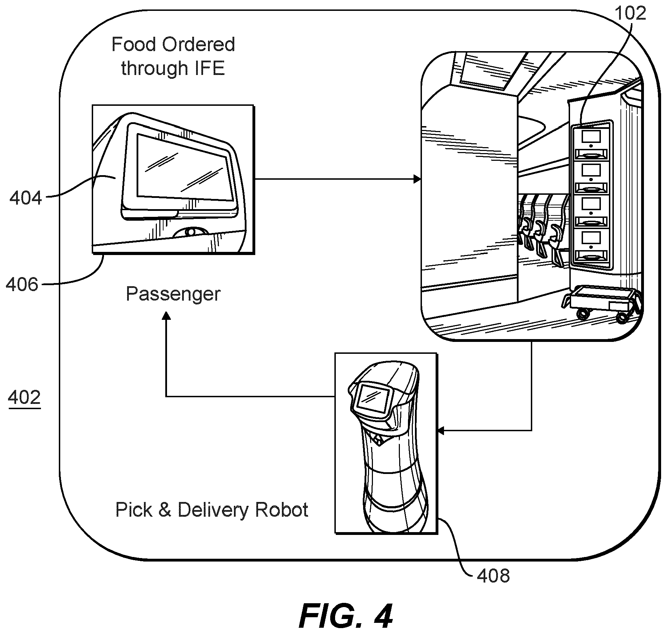

Fig. 4 shows another possible configuration for using the appliance 102. The appliance 102 can be part of a communication network 402 connecting the appliance 102 and an end user interface 404 for personalizing and selecting a personalized mixture. The end user interface 404 and the appliance 102 are not necessarily mechanically connected; the end user interface 404, can be part of an existing television screen and be embedded into a passenger seat 406. A delivery vehicle 408 such a robot can be used for delivering the mixture from the appliance 102, from a galley, to a location proximate to the end user. The appliance 102 can also be part of a stack of appliances in a galley of an aircraft. A robot is able then move between passengers and the galley or passengers are able to come and pick up the food from the stack of appliances.

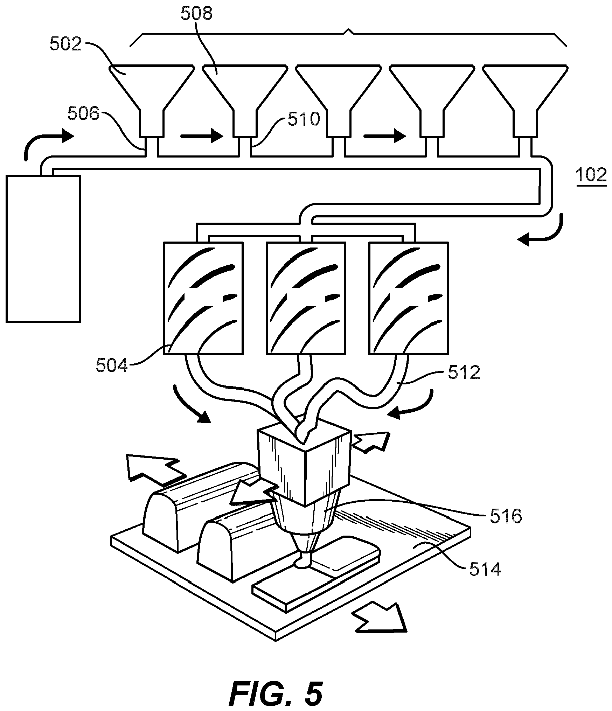

Fig. 5 shows a schematic of an inside of the appliance 102. The appliance 102 includes at least a first ingredient container 502 connected to a first mixer 504 by a first conduit 506, a second ingredient container 508 connected to the first mixer 504 by a second conduit 510, and a nozzle 516 connected to the first mixer 504 by a third conduit 512 which injects, sprays, or otherwise delivers a mixture onto a substrate or plate 514 positioned below. Further, the substrate 514 can be moveable with relation to the nozzle 516 and the nozzle 516 can be moveable with respect to the substrate 514 to evenly and smoothly spread the mixture. The appliance 102 can include various types of ingredients, such as water, a powder or spices or dehydrated foodstuffs, or purees. Once the mixture is produced on the substrate, energy is applied to the mixture to produce a cooked item.

The methods and systems of the present disclosure, as described above and shown in the drawings, provide for a meal preparation system with superior properties including increased decreased costs, increased flexibility, and decreased waste. While the apparatus and methods of the subject disclosure have been showing and described with reference to embodiments, those skilled in the art will readily appreciate that changes and/or modifications may be made thereto without departing from the scope of the invention as defined by the claims.

## Claims

1. A system for producing an edible arrangement comprising:
an appliance (102) configured to cook an uncooked food product by providing energy to the uncooked food product on a substrate (514); and
a galley (104), meal cart (300), or table (108) housing the appliance.

2. The system of claim 1, wherein the appliance is embedded within a cabinet.

3. The system of claim 1, wherein the appliance is movably embedded within a serving table (108).

4. The system of claim 3, wherein the appliance is moveable between a first position (110), wherein the appliance is fully below a top surface of the serving table, and a second position (112) wherein at least a portion of the appliance is below the top surface of the serving table.

5. The system of claim 1, wherein the galley or meal cart are within a vehicle.

6. The system of any preceding claim, wherein the appliance includes:
a first ingredient container (502) connected to a first mixer (504) by a first conduit (506);
a second ingredient container (508) connected to the first mixer (504) by a second conduit (510); and
a nozzle (516) connected to the first mixer by a third conduit (512) configured to inject a mixture including the first ingredient and the second ingredient onto the substrate (514).

7. The system of any preceding claim, wherein the meal cart includes a refrigeration system (302), and optionally wherein the refrigeration system includes a dry ice compartment.

8. The system of any preceding claim, wherein the meal cart includes a plurality of appliances (304), and optionally wherein each of the appliances are connected to a pneumatic pack (306).

9. The system of any preceding claim, wherein the appliance includes a depth greater than a width.

10. The system of any preceding claim, further comprising a communication network (402) connecting the appliance and an end user interface (404) for personalizing and selecting a personalized mixture.

11. The system of claim 10, wherein the end user interface and the appliance are not mechanically connected.

12. The system of claim 10 or 11, wherein the end user interface is embedded into a passenger seat (406).

13. The system of claim 10, 11 or 12, further comprising a delivery vehicle (408) for delivering the mixture from the appliance to a location proximate to the end user interface.

14. The system of claim 6 or any claim dependent thereon, wherein the substrate is moveable with relation to the nozzle, and/or wherein the nozzle is moveable with respect to the substrate.

15. The system of claim 6 or any claim dependent thereon, wherein at least one of the ingredients is water, or wherein at least one of the ingredients is a powder, or wherein at least one of the ingredients is a puree.
